# EUROPÄISCHE PATENTSCHRIFT

(11) **EP 2 174 126 B1**
(45) Veröffentlichungstag und Bekanntmachung des Hinweises auf die Patenterteilung: **02.09.2015**
(21) Anmeldenummer: 08786698.4
(22) Anmeldetag: 31.07.2008
(51) Int. Cl.: G01N 31/22, G01N 21/64, G01N 21/77

(54) **Optochemischer Sensor**
Opto-chemical Sensor
Capteur optochimique

(30) Priorität: 02.08.2007 EP 07113709
(43) Veröffentlichungstag der Anmeldung: 14.04.2010
(73) Patentinhaber: Mettler-Toledo AG, 8606 Greifensee (CH)
(72) Erfinder: THRIER, Rolf, CH-8317 Tagelwangen (CH)
(86) Internationale Anmeldenummer: PCT/EP2008/060075
(87) Internationale Veröffentlichungsnummer: WO 2009/016236

(56) Entgegenhaltungen:
- WO-A-02/29397
- WO-A-2004/027412
- US-A- 5 387 525
- US-A1- 2004 063 146
- EMILIYANOV G ET AL: "LOCALIZED BIOSENSING WITH TOPAS MICROSTRUCTURED POLYMER OPTICAL FIBER" OPTICS LETTERS, OSA, OPTICAL SOCIETY OF AMERICA, WASHINGTON, DC, US, Bd. 32, Nr. 5, 1. März 2007 (2007-03-01), Seiten 460-462, XP001504698 ISSN: 0146-9592

## Beschreibung

Die vorliegende Erfindung betrifft optochemische Sensorelemente zur Messung gasförmiger oder gelöster Analyte, insbesondere von Sauerstoff, und deren Verwendung.

Die Bestimmung der Konzentration gasförmiger oder gelöster Analyte ist in einer Vielzahl von Anwendungen und Vorgängen notwendig. Beispielsweise ist die Überwachung der Sauerstoffkonzentration in biotechnologischen Prozessen für die Steuerung der Prozesse unerlässlich. Dies gilt auch für eine Reihe weiterer Analyte, wie z. B. CO₂, SO₂, H₂O₂ oder Stickoxid.

Von den bekannten Methoden zur Messung solcher Analyte haben einige den Nachteil, dass sie die Konzentration des Analyten während der Messung verändern, da dieser bei der Messung verbraucht wird. Als Alternative zu solchen Messmethoden wurden in jüngerer Zeit optochemische Messverfahren entwickelt. Diese Verfahren basieren auf einem Sensorelement, dessen Eigenschaften sich in Abhängigkeit von der Menge des anwesenden Analyten ändern. Eine solche Eigenschaft ist die Fluoreszenz derartiger optochemischer Sensorelementen, die durch den Analyten beispielsweise angeregt oder gelöscht bzw. gequencht werden kann.

In US 6,432,363 B2 wird ein optochemisches Sensorelement beschrieben, das einen lumineszierenden Farbstoff, immobilisert in einer Polymermatrix, enthält. Die Polymermatrix ist frei von Weichmachern und umfasst mindestens ein Polymer mit Phenylgruppen in der Hauptkette.

Die WO 95/26501 A1 offenbart ein optisches Sensorelement zur Bestimmung von Ionen in wässrigen Lösungen. Das Sensorelement enthält einen transparenten Träger, der mit einem hydrophoben Polymer mit einer Glasübergangstemperatur (Tg) im Bereich von -150°C bis 50°C beschichtet ist. Der Fluorophor ist dabei in dieser Beschichtung immobilisiert.

In US 5,387,525 A wird ein Verfahren zur Fluoreszenzaktivierung von polyanionischen Fluorophoren durch quartäre Ammoniumsalze, wie tetra-Butylammoniumhydroxid, beschrieben sowie deren Verwendung in einem optochemischen Sensorelement.

In WO 2004/027412 A1 wird ein Sensorelement beschrieben, welches sich unter Einfluss eines Analyten verfärbt und so beispielsweise als Indikator für das Verderben von Lebensmitteln eingesetzt werden kann. Das Sensorelement umfasst einen in einer Matrix immobilisierten Übergangsmetallkomplex, welcher auch ein Fluoreszenzfarbstoff oder Fluorophor sein kann.

Y. Amao et al. (Analytica Chimica Acta 407 (2000) 41-44) beschreiben ein Fluoreszenz-basiertes Sensorelement für Sauerstoff, in welchem ein Al-Phthalocyanin-Fluorophor immobilisiert in einem Polystyrol-Film Anwendung findet.

Y. Amao et al. (Analytica Chimica Acta 421 (2000) 167-174) beschreiben die Sauerstoffmessung unter Ausnutzung von Lumineszenz-Änderungen von Metalloporphyrinen, die in einem Poly(isobutylmethacrylat-co-trifluoromethacrylat)-Film immobilisiert sind.

Y. Amao et al. (Analytica Chimica Acta 445 (2001) 177-182) beschreiben einen lumineszierenden Iridium(III)-Komplex, immobilisert in einem Polymer-Film, als Material zur optischen Sauerstoff-Bestimmung.

In M. Florescu, A. Katerkamp (Sensors and Actuators B 97 (2004) 39-44) wird die Optimierung von Polymer-Membranen zur optischen Sauerstoffmessung beschrieben. Als Fluorophor wurde ein Ruthenium-Metall-Komplex (Ru(dpp)₃Cl₂) verwendet.

Als Nachteil der beschriebenen optochemischen Sensorelemente erweist sich oft ihre eher geringe Stabilität gegenüber Reinigungsprozessen und dem Sterilisieren in der Prozessanlage, z. B. Autoklavieren, CIP-Behandlungen (**C**lean **I**n **P**lace), SIP-Behandlung (**S**terilize **I**n **P**lace), und auch ihre ungenügende Stabilität in Prozessmedien, welche z. B. polare organische Lösungsmittel enthalten. Gerade bei Sensorelementen, die im biotechnologischen Bereich eingesetzt werden, sind das Reinigen, das Autoklavieren und CIP/SIP-Behandlungen der mit Sensorelementen versehenen Messvorrichtungen wichtig. Die mit dem Sterilisieren bzw. Autoklavieren einhergehenden hohen Temperaturen bewirken oft einen Verlust an immobilisierten Fluorophoren, z. B. durch thermische Zersetzung und Ausbleichen des Fluorophors sowie durch Auswaschen des Fluorophors aus der Matrix. Vor allem bei Polymeren mit niedriger Glasumwandlungstemperatur führen hohen Temperaturen zu einer erhöhten Beweglichkeit der Polymerketten in der Polymermatrix und somit zu einer erhöhten Diffusion des Fluorophors durch die Polymermatrix und damit zu einem erhöhten Auswaschen. Zudem weisen insbesondere die in US 6,432,363 B2 genannten Polymermatrizen aufgrund des aromatischen Charakters des Polymerrückgrats eine Eigenfarbe auf, welche ihre optische Durchlässigkeit oder Transparenz beeinflusst und damit die Messung der Fluoreszenz erschwert. Eine solche Eigenfarbe kann auch durch Alterungsprozesse entstehen, welche durch Temperatur- oder Feuchtigkeits-Einwirkung hervorgerufen werden und die beispielsweise zu einer Vergilbung der Polymermatrix führen.

Der Begriff Stabilität umfasst verschiedene Aspekte. Das optochemische Sensorelement ist vorzugsweise thermisch stabil und der Fluorophor wird weder unter thermischen Belastung noch aufgrund von Alterungsprozessen, welche durch den Einsatz im Prozess, CIP-Prozesse oder Autoklavieren hervorgerufen werden können, ausgeblichen oder ausgewaschen. Weiterhin sollten sich die optischen und mechanischen Eigenschaften der Polymermatrix im Laufe der Zeit nicht verändern und die Polymermatrix weder vergilben, spröde werden oder ähnliche Alterungseffekte zeigen. Um die Funktionsfähigkeit zu erhalten, ist das Polymer bzw. die Polymermatrix vorzugsweise gegenüber interferierenden Stoffen, wie Wasser, Ionen und/oder Lösungsmittel, auch nach einer Alterung beständig, so dass eine Schädigung der Polymermatrix und des darin eingebetteten Fluorophors verhindert werden kann. Zudem sollte die Polymermatrix gegen die verwendeten Lösungsmittel stabil sein, in diesen nicht aufquellen, sowie eine konstante Konzentration und gleichmässige Verteilung des Fluorophors aufweisen, sowie eine konstante Stern-Vollmer-Charakteristik zeigen.

Aufgabe der vorliegenden Erfindung ist es, ein verbessertes optochemisches Sensorelement zur Verfügung zu stellen, das eine hohe mechanische Stabilität sowie eine hohe Stabilität gegenüber Reinigungsprozessen und Prozessmedien aufweist und damit im Wesentlichen alterungsbeständig ist und eine lange Lebensdauer aufweist. Das Sensorelement sollte im Wesentlichen auch keine durch die Polymermatrix hervorgerufene Eigenfarbe aufweisen. Zudem soll dadurch auch eine wirtschaftliche Alternative zu den kommerziell erhältlichen optochemischen Sensorelementen zur Verfügung gestellt werden, welche vorzugsweise auch den Anforderungen für den Einsatz in kritischen biologischen und biochemischen Prozessen entsprechen und kompatibel mit den dort eingesetzten Substanzen sind.

Die Aufgabe wird durch ein verbessertes optochemisches Sensorelement gemäss dem unabhängigen Anspruch gelöst. Weitere bevorzugte Ausführungsformen sind Gegenstand der abhängigen Ansprüche.

Ein erfindungsgemässes optochemisches Sensorelement umfasst einen geeigneten Fluorophor, der in einer Polymermatrix immobilisiert ist. Das Polymer, welches zur Bildung der Polymermatrix verwendet wird, weist ein nicht-aromatisches Rückgrat auf. Bevorzugte Schichtdicken der Polymermatrix liegen im Bereich von etwa 3 bis 10 µm.

Mit "Rückgrat" wird die Hauptkette des Polymers bezeichnet. Das heisst, dass lediglich die Hauptkette des Polymers nicht-aromatisch ist. Seitenketten oder Seitengruppen können auch aromatische Komponenten aufweisen.

Mit "Analyt" wird die zu messende Substanz, insbesondere Sauerstoff, bezeichnet.

Durch das nicht-aromatische Rückgrat kann die Eigenfarbe der Polymermatrix auf ein geringes Mass reduziert und eine möglichst gute optische Transparenz der Polymermatrix erzielt werden. Folgende Polymere können für die Bildung der Polymermatrix erfindungsgemässer optochemischer Sensorelemente eingesetzt werden: Cyclische Olefin-Copolymere (COC), wie Ethylen-Norbornen Copolymer, cyclische Olefin-Polymere (COP) und Poly(n-methylmethacrylimid) (PMMI). Es ist auch möglich, Mischungen dieser Polymere einzusetzen.

Der Einsatz dieser Polymere als Polymermatrix in Sensorelementen ist vorteilhaft, da diese eine besonders hohe mechanische Stabilität und eine hohe Stabilität gegenüber sauren und basischen Reinigungsprozessen aufweisen, woraus eine lange Lebensdauer der Sensorelemente resultiert.

Die Wahl des Fluorophors hängt von dem zu messenden Analyten und dessen Löslichkeit in der Polymermatrix ab. Geeignet sind Fluorophore mit einer langen Fluoreszenzlebensdauer und solche deren Fluoreszenz eine ausgeprägte Abhängigkeit von der Konzentration des zu bestimmenden Analyten aufweist. Beispiele für geeignete Fluorophore, insbesondere für die Sauerstoff-Bestimmung, stellen Pt(II)-meso-Tetra(pentafluorophenyl)-porphin, Pt(II)-5,10,15,20-tetrakis-(2,3,4,5,6-pentafluorophenyl)-porphyrin (PtTFPP), Pt(II)-octaethylporphyrin (PtOEP), Pt(II)-octaethylporphyrinketone (PtOEPK), die zu diesen analoge Pd(II)-Komplexe PdTFPP, PdOEP und PdOEPK, sowie Pd(II)-meso-Tetraphenyl-(tetrabenzo)porphin (PdTPTBP) dar. Desweiteren können Fluorophore wie Ir(III)((N-methyl-benzoimidazol-2-yl)-7-(diethylamino)-cumarin))₂(acac), Ir(III)((benzothiazol-2-yl)-7-(diethylamino)-cumarin))₂-(acac) eingesetzt werden. Zahlreiche weitere geeignete Fluorophore sind kommerziell erhältlich.

Weiterhin ist es vorteilhaft, wenn die eingesetzten Fluorophore über eine ausreichende Löslichkeit verfügen, um sowohl in den zur Herstellung der Polymermatrix verwendeten Lösungsmitteln als auch im Polymer sowie in der Polymermatrix selbst in ausreichender Konzentration gelöst werden zu können. Vorzugsweise liegen die gelösten Fluorophore in diesen Lösungsmitteln sowie in der Polymermatrix im Wesentlichen agglomeratfrei vor und sind vorzugsweise homogen gelöst.

Für die Verwendung als Fluorophor eignen sich daher in einer hydrophoben COC- oder COP-Matrix besonders die erwähnten hydrophoben Porphyrin-Komplexe. In PMMI-Matrizen können auch hydrophilere Fluorophore eingesetzt werden.

Als Fluorophor können weiterhin verschiedene Ruthenium- oder Osmium-Komplexe, wie Tris(phenanthrolin)Ru(II)-Chlorid, Tris(4,7-diphenyl-1,10-phenanthrolin)Ru(II)-TMS oder Tris(4,4-diphenyl-2,2-bipyridin)Ru(II)-Chlorid eingesetzt werden. Diese hydrophilen Fluorophore können ebenfalls in den angegebenen Polymermatrizen verwendet werden, allerdings sollten sie zur Abschwächung ihrer Hydrophilie zusammen mit einem lipophilen Gegenion, beispielsweise Tetraphenylborat, eingesetzt werden.

Die erfindungsgemässen optochemischen Sensorelemente zeigen eine ausgezeichnete Beständigkeit gegenüber Reinigungs-Prozessen und Sterilisationen, z. B. Autoklavieren (30 min bei 130°C in Wasserdampfatmosphäre) oder gegenüber CIP-Behandlungen (30 - 60 min mit 3%-iger NaOH-Lösung bei 90°C).

In einer bevorzugten Ausführungsform wird das Polymer aus Ethylen-Norbornen Copolymeren und Poly(n-methylmethacrylimid) ausgewählt. Diese Polymermatrizen sind kommerziell unter dem Namen Topas (Ethylen-Norbornen Copolymeren) und Pleximid (Poly(n-methylmethacrylimid)) erhältlich.

Diese Polymere sind als Polymermatrizen zur Immobilisierung von Fluorophoren für autoklavierbare optochemische Sensorelemente, insbesondere sauerstoffsensitive Sensorelemente, aufgrund ihrer nachfolgend beschriebenen Eigenschaften besonders gut geeignet.

Die Polymere weisen eine sehr gute optische Transparenz auf, so dass optische Strahlung durch die Polymermatrix hindurch den Fluorophor anregen kann. Die optische Transparenz (gemäss ISO 13468-2) für Topas liegt bei ca. 91% (Typen: 5013X25 Tg = 134 °C; 6013S-04 Tg = 138 °C; 6015S-04 Tg = 158 °C; 6017S-04 Tg = 178°C; 5013S-04 Tg = 134°C; TKX-0001 Tg = 134°C) und für PMMI bei etwa 90-91%. Alternativ wird für die optischen Topas-Grade der "Haze" nach ISO 14782 angegeben. Dieser beträgt für die Topas-Qualitäten < 1% (Typen: 5013X14 Tg = 136°C; 6013F-04 Tg = 140°C).

Die Polymere besitzen eine gute Licht- und/oder Strahlungsbeständigkeit, so dass die optische Transparenz der Polymermatrix auch nach Bestrahlung des Sensorelements mit einer zur Anregung des Fluorophors geeigneten Strahlung gewährleistet bleibt. Geeignete Fluorophore werden z. B. mit Strahlung aus dem nahen UV-Bereich und/oder UV-VIS-Bereich angeregt, vorzugsweise mit Strahlung mit einer Wellenlänge zwischen etwa 320 nm und etwa 700 nm.

Die Polymere weisen auch eine sehr hohe Beständigkeit gegenüber GammaStrahlung und Gammasterilisation sowie gegenüber Sterilisation mit Ethylenoxid auf. Dieses sind häufig eingesetzte Methoden zur Sterilisation von Sensorelementen. Die optochemischen Sensorelemente, insbesondere die verwendeten Polymere, dürfen dabei weder vergilben noch andere Schäden nehmen, wie z. B. verspröden, hydrophilisieren oder einem Polymerabbau, einem Abbau der Kettenlängen oder einer unkontrollierte Polymervernetzung unterliegen.

Zudem sind Polymermatrizen aus Ethylen-Norbornen Copolymeren oder Poly(n-methylmethacrylimid) auch beständig gegenüber Dampfsterilisationen (130°C in Wasserdampfatmosphäre).

Die bevorzugten Polymermatrizen besitzen eine ausreichend hohe Sauerstoffpermeation (250 cm³*100µm/(m²*Tag*bar) für Topas 5013X14 Tg = 136°C und 280 cm³*100µm/(m²*Tag*bar) für Topas 6013F-04 bei 23°C 50% rel. Feuchte) (gemäss ASTM D3985). Dadurch können erfindungsgemässe optochemische Sensorelemente mit kleinen Ansprechzeiten realisiert werden.

Im Weiteren zeigen die bevorzugten Polymermatrizen eine nur geringe Wasseraufnahme, Wasserdampfdurchlässigkeit und Quellneigung in polaren Lösungsmitteln wie Aceton oder Isopropanol. Dieses ist deshalb vorteilhaft, da Wasser und verschiedene Lösungsmittel die Matrix sowie deren Stern-Vollmer-Charakteristik verändern können. Ferner ist mit zunehmender Wasseraufnahme auch mit einer Diffusion von Ionen, insbesondere von Fremdionen, in die Polymermatrix zu rechnen, was aus Gründen der Interferenz letzterer dringend zu vermeiden ist. Zudem führt eine Aufnahme von Wasser oder Lösungsmittel auch zu einer unerwünschten Quellung der Polymermatrix, was letztlich die Fluorophor-Konzentration im Polymer bzw. in der Polymermatrix beeinflusst, und was in Messungenauigkeiten resultieren kann. Die Polymermatrix hat also auch eine Membranfunktion, indem sie einerseits für den Analyten, insbesondere für Sauerstoff, permeabel ist und andererseits Wasser, Wasserdampf, Lösungsmittel und Ionen zurückhält, so dass ein Abbau des Fluorophors durch eindringende Stoffe vermieden werden kann.

Für Topas (Ethylen-Norbornen Copolymere) werden die folgende Wasseraufnahme und die folgende Wasserdampfpermeation angegeben.

Wasseraufnahme (nach ISO 62):
0.01% (alle Topas-Typen)

Wasserdampfpermeation (38°C, 90% rel. Feuchte):
1.0 g*100µm/(m²*Tag) (Topas Typ 5013X14)
1.3 g*100µm/(m²*Tag) (Topas Typ 6013F-04)

Gängige Polymermatrizen, die zur Immobilisierung von Fluorophoren verwendet werden, weisen wesentlich höhere Wasseraufnahmen auf, z. B. Polyetherimide (PEI) 0.25%, PSU 0.24% und Polyethersulphon 0.4%.

Weiterhin sind die Fluorophore in den bevorzugten Polymermatrizen gut löslich. Die Konzentration des im Polymer gelösten Fluorophors ist genügend gross, um bei dünnen Sensorelementen eine gute Fluoreszenzantwort und eine schnelle bzw. kurze Ansprechzeit zu erhalten.

Weitere geeignete Polymere sind cyclische Olefin-Polymere (COP), welche kommerziell unter den Namen Zeonex oder Zeonor erhältlich sind, oder Poly(n-methylmethacrylimid) (PMMI), welches unter dem Namen Pleximid kommerziell erhältlich ist.

Für diese Polymere werden die folgenden Eigenschaften angegeben:

| | Zeonex | Zeonor | Pleximid |
|---|---|---|---|
| optische Transparenz [%] | 92 | 92 (bei 3mm Dicke) | 90 |
| Wasseraufnahme [%] | <0.01 | <0.01 | 0.4 |
| Glasübergangstemperatur [°C] | 70 - 163 | 70 - 163 | 172 |
| Sauerstoffpermeabilität [cm³*cm/(cm²*s*cmHg)] | | ca. 1*10⁻³ | |
| Wasserdampfpermeation 40 °C 90% rel. Feuchte [g*100µm /(m²*Tag)] | 1 - 2.5 | ca. 1 | |

Die Glasübergangstemperatur von Zeonex und Zeonor ist je nach tatsächlicher Zusammensetzung der Polymere einstellbar.

Für die Filmbildung aus Lösung ist es vorteilhaft, dass das Polymer in einem geeigneten Lösungsmittel mit hohem Dampfdruck löslich ist. Es ist wichtig, dass sich der gewählte Fluorophor ebenfalls in genügender Konzentration in demselben Lösungsmittel löst, um eine gleichmässige Verteilung des Fluorophors in der Polymermatrix zu erreichen. Mögliche Lösungsmittel für die erfindungsgemässen Polymere sind Chloroform und Cyclohexan.

In einer bevorzugten Ausführungsform des erfindungsgemässen optochemischen Sensorelements umfasst die Polymermatrix Ethylen-Norbornen Copolymere.

Die Ethylen-Norbornen Copolymere (Cyclische Olefin-Copolymere, COC) weisen hohe Glasübergangstemperaturen (Tg) auf. Mit Glasübergangstemperaturen, die höher liegen als die beim Autoklavieren üblicherweise gewählten 130°C wird verhindert, dass die Polymerketten während eines Autoklavierzyklus beweglich werden und der Fluorophor aus der Matrix diffundieren kann. Dadurch wird ein Verlust des Fluorophors praktisch vermieden, was eine hohe Lebensdauer des erfindungsgemässen Sensorelements bewirkt. Durch die Variation des Norbornen-Anteils im Copolymer kann zudem die Glasübergangstemperatur des Polymers beeinflusst und damit dem gewünschten Zweck angepasst werden.

In weiteren bevorzugten Ausführungsformen des optochemischen Sensorelements umfasst die Polymermatrix cyclische Olefin-Polymere (Zeonex, Zeonor; COP) oder Poly(n-methylmethacrylimid) (PMMI).

In einer weiteren Ausführungsform ist die Polymermatrix auf einem Träger aufgebracht. Dadurch weist das optochemische Sensorelement eine sehr gute Widerstandsfähigkeit gegenüber mechanischen Belastungen, z. B. erhöhten Drücke oder Druckschwankungen in Bioreaktoren, auf.

Bevorzugte Materialien, aus welchen Träger hergestellt werden können, sind Glas, Polyester, amorphe oder teilkristalline Polyamide, Polyacrylate, Polycarbonate, COC-Polymere (Topas), COP-Polymere (Zeonor, Zeonex) und Poly(n-methylmethacrylimid). COC-Polymere sind unter dem Namen Topas (Ticona-Polymer), COP-Polymere unter den Markennamen Zeonor oder Zeonex (Zeon Chemicals) und Poly(n-methylmethacrylimid) unter dem Namen Pleximid (Röhm GmbH) erhältlich.

Neben den bereits erwähnten Trägermaterialien können auch hybride Träger aus Kombinationen dieser Materialien, wie beispielsweise einem Glas-Polymer-Verbundmaterial, verwendet werden.

Die zu den cyclischen Olefin-Copolymeren (COC) zählenden Ethylen-Norbornen Copolymere sind als Material für den Träger bevorzugt, da sie im Wesentlichen keine Eigenfluoreszenz und eine sehr gute optische Transparenz aufweisen, welche sie auch nach einer Alterung behalten.

In einer weiteren Ausführungsform weist das Sensorelement eine Deckschicht auf. Diese Deckschicht muss für den Analyten durchlässig sowie für Fremdstrahlung undurchlässig sein, so dass eine Störung der Fluoreszenzmessung durch Fremdlicht oder Fluoreszenz aus der Messprobe vermieden werden kann. Mögliche Materialien für die Deckschichten sind weisse, poröse Teflonschichten (Dicke 5 µm) oder weisse sauerstoffpermeable Siliconschichten oder weisse poröse Papiere.

In einer weiteren Ausführungsform wird die Polymermatrix in Form von Polymersphären oder Matrix-Bruchstücken in einen Siliconfilm eingebettet. Der Fluorophor wird direkt in den Polymersphären oder Matrix-Bruchstücken immobilisiert. Dieses ist vorteilhaft, da die im Silicon eingebetteten Sphären oder Bruchstücke aufgrund von diffuser Streuung die Fluoreszenz verstärken.

In einer bevorzugten Ausführungsform ist der Analyt gasförmiger oder gelöster Sauerstoff, welcher z. B. in wässrigen Lösungen oder Medien oder in Medien, die geringe Anteile an polaren Lösungsmitteln, wie z. B. Methanol, Ethanol, Aceton oder Isopropanol enthalten, gelöst ist.

In weiteren Ausführungsformen ist der Analyt gasförmiges oder gelöstes H₂O₂, SO₂ oder Stickoxid.

Insbesondere zur Bestimmung von gasförmigem oder gelöstem Sauerstoff ist es vorteilhaft, wenn der Träger für Sauerstoff undurchlässig ist und eine möglichst geringe Sauerstoff-Löslichkeit aufweist. Auf diese Weise kann die Funktionsfähigkeit des optochemischen Sensorelements gewährleist werden und dieses im Wesentlichen driftfrei und mit einer kurzer Ansprechzeit betrieben werden. Vorzugsweise weist der Träger eine Sauerstoffpermeabilität und Sauerstofflöslichkeit auf, welche wesentlich kleiner ist als die der Polymermatrix in der der Fluorophor immobilisiert wird.

Erfindungsgemässe Sensorelemente können, wie es im Zusammenhang mit mehreren Ausführungsbeispielen im Folgenden beschrieben wird, mit verschiedenen Verfahren hergestellt werden.

Bei der Herstellung der erfindungsgemässen Sensorelemente beeinflusst die Schichtdicke der Polymermatrix mit dem immobilisierten Fluorophor zwei wichtige Grössen beim Messen von Analyten mittels Fluoreszenzlöschung. Zum einen bestimmt die Schichtdicke die Emissionsrate bzw. Reflexionsrate und damit die Intensität der Fluoreszenzantwort und zum anderen ist sie massgeblich für die Ansprechzeit der Messvorrichtung.

In einer bevorzugten Ausführungsform wird die Polymermatrix mit dem Fluorophor als Film entweder direkt auf einem Träger gebildet oder nach der Film-Bildung auf den Träger aufgebracht. Um einen guten Verbund zwischen Film und Träger zu gewährleisten, werden vorzugsweise Haftvermittler oder Klebstoffe eingesetzt. Die Polymermatrix kann durch verschiedene Verfahren, wie Dip-Coating, Spin-Coating oder mittels Rakelfilmbildung auf einen Träger aufgebracht werden.

Es ist auch möglich, eine Polymermatrix mit immobilisiertem Fluorophor direkt auf einen Kern eines Lichtleiters zu applizieren. Interessant ist diese Methode vor allem für spröde Polymertypen, wie z. B. Topas (Tg = 180°C), welche nach dem Applizieren mechanisch möglichst nicht mehr belastet und damit beispielsweise durch Absplittern beschädigt werden dürfen. Die Auftragung auf einen Lichtleiterkern ist beispielsweise mit Topas möglich. Dazu wird die Polymermatrix mit dem immobilisierten Fluorophor direkt auf den Kern eines POF-Lichtleiters (Polymeric Optical Fibre) angeordnet, dessen Kern vorzugsweise aus einem Polymer mit hohem Brechungsindex besteht, wie beispielsweise Poly(pentabromo-phenylacrylat-co-glycidyl-methacrylat).

Es zeigen rein schematisch:
- Fig. 1: eine optochemische Messvorrichtung mit einem erfindungsgemässen Sensorelement;
- Fig. 2: ein optochemisches Sensorelement als Teilvergrösserung von Figur 1;
- Fig. 3: eine Ausführungsform des optochemischen Sensorelements;
- Fig. 4: eine weitere Ausführungsform des optochemischen Sensorelements.

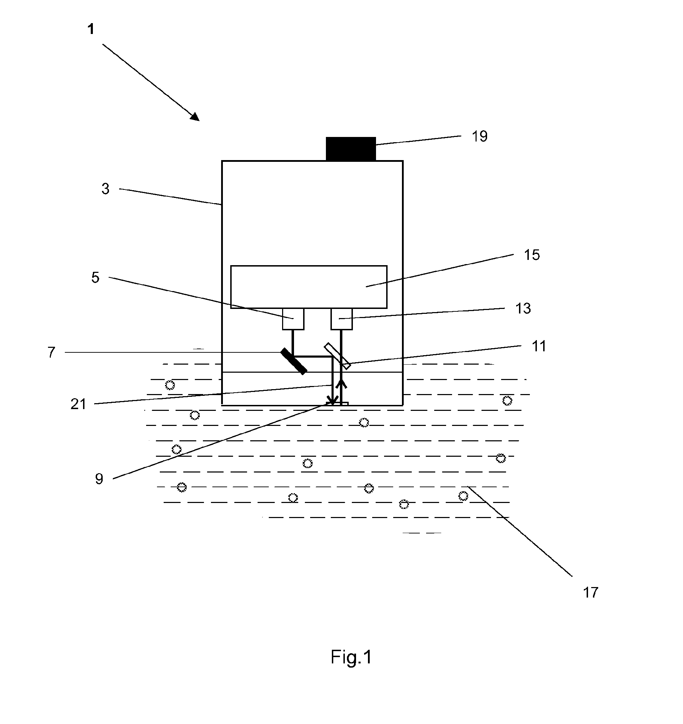

Figur 1 zeigt den Aufbau einer optochemischen Messvorrichtung 1 mit einem erfindungsgemässen Sensorelement 9. Die Messvorrichtung 1 umfasst ein Gehäuse 3, in dem eine Strahlungsquelle 5, beispielsweise eine LED, ein Spiegel 7, das optochemische Sensorelement 9, ein Strahlteiler oder Filter 11, ein Detektor 13 und eine Messelektronik 15 angeordnet sind. Die von der Strahlungsquelle 5 emittierte Strahlung, das Anregungslicht oder die Anregungsstrahlung, wird über den Spiegel 7 und den Strahlteiler 11 auf das optochemische Sensorelement 9 gelenkt. Das optochemische Sensorelement 9 steht mit dem Medium 17, das den zu messenden Analyten enthält, in Kontakt. Die nach Anregung des Fluorophors im optochemischen Sensorelement 9 emittierte Fluoreszenz passiert den Strahlteiler 11 ohne Ablenkung und trifft auf den Detektor 13, dessen Signal von der Messelektronik 15 verarbeitet und über einen Transmitter oder eine Schnittstelle 19 weitergeleitet wird. Der Strahlengang 21 ist lediglich schematisch angedeutet.

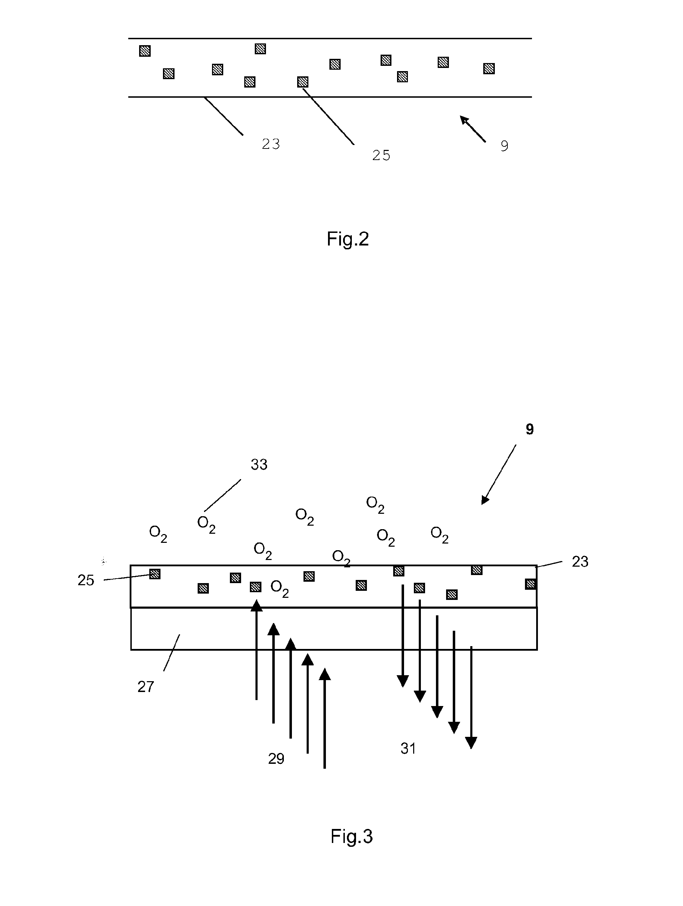

Figur 2 zeigt in einer Teilvergrösserung der optochemischen Messvorrichtung 1 das optochemische Sensorelement 9 in seiner einfachsten Ausführungsform. Er umfasst eine Polymermatrix 23 und einen darin immobilisierten Fluorophor 25.

Figur 3 zeigt eine Ausführungsform des optochemischen Sensorelements 9 der Messvorrichtung 1. Die Polymermatrix 23 mit dem darin immobilisierten Fluorophor 25 ist auf einem Träger 27 angeordnet. Dieser Träger verleiht der Membran 9 die nötige mechanische Stabilität, um beispielsweise Druckschwankungen standzuhalten. Ebenfalls gezeigt ist die Anregungsstrahlung 29, die nach dem Passieren des Trägers 27 auf den in der Polymermatrix 23 immobilisierten Fluorophor 25 trifft und die von diesem emittierte Fluoreszenz 31. Die Intensität der Fluoreszenzantwort wird durch den Analyten 33, z. B. Sauerstoff, beeinflusst.

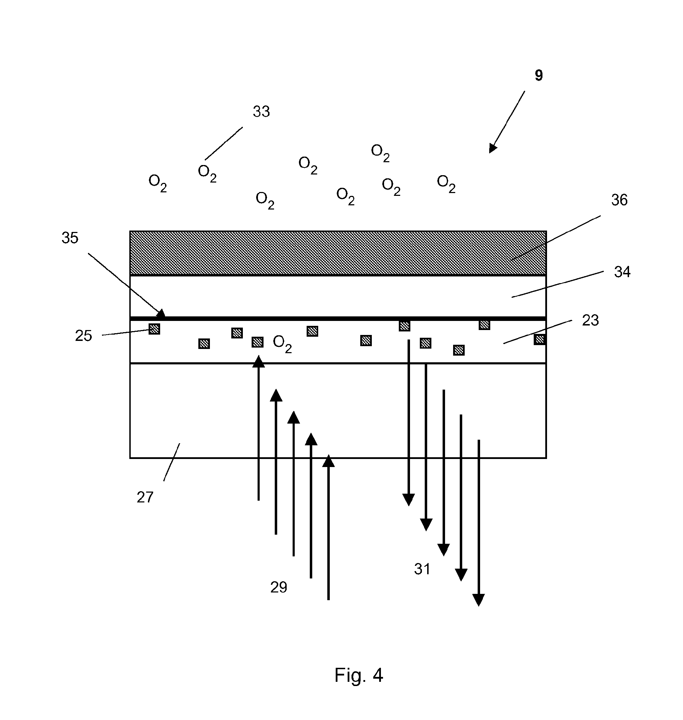

In Figur 4 wird eine weitere Ausführungsform des optochemischen Sensorelements 9 gezeigt, welche mindestens eine, hier sind zwei gezeigt, zusätzliche Deckschicht 34, 36 zur Abgrenzung der Polymermatrix 23 gegenüber dem Medium aufweist. Diese Deckschicht 34, 36 ist vorzugsweise für den Analyten permeabel und für Fremdstrahlung undurchlässig, so dass von aussen einfallende Fremdstrahlung vorzugsweise an der Deckschicht 34, 36 reflektiert wird und nicht in die Polymermatrix 23 eindringt.

Das Sensorelement 9 umfasst einen Glaswafer als Träger 27, auf den wie bereits in Figur 3 gezeigt eine Polymermatrix 23 aufgebracht ist, in der ein Fluorophor 25 immobilisiert ist. Die Polymermatrix 23 ist im Wesentlichen optisch transparent. An die Polymermatrix 23 grenzt eine erste Deckschicht 34 an, welche hier beispielsweise eine weisse Siliconschicht ist. An dieser ersten Deckschicht 34 wird die Anregungsstrahlung 29 im Wesentlichen reflektiert, so dass eine hohe Fluoreszenzausbeute und kleine Ansprechzeiten realisiert werden können. Vorzugsweise wird die emittierte Fluoreszenz oder Fluoreszenzantwort 31 nahezu vollständig an der Grenzschicht 35 zwischen der ersten Deckschicht 34 und der Polymermatrix 23 reflektiert oder diffus gestreut und dann zum Detektor gelenkt (s. Figur 1).

Zusätzlich kann das Sensorelement 9, wie hier gezeigt, mit einer weiteren Deckschicht 36 abgedeckt werden, welche beispielsweise als schwarze Siliconschicht ausgestaltet ist. Die weitere Deckschicht 36 ist vorzugsweise für den Analyten permeable und strahlungsundurchlässig, so dass weder Fluoreszenzstrahlung aus dem Sensorelement in das Messmedium austreten kann, noch die Messung mit dem Sensorelement 9 durch von aussen eindringendes Fremdlicht gestört werden kann. Als weisses Silicon wird hier beispielsweise mit TiO₂ versetztes Silicon bezeichnet und als schwarzes Silicon mit Russpartikeln versetztes Silicon.

### Beispiel 1 Topas (Ethylen-Norbornen-Copolymere)

22g Topas 6017S-04 wurden in 275g Chloroform gelöst. Dieser Lösung wurden anschliessend 0.5g Pt(II)-meso-Tetra(pentafluorophenyl)porphin (CAS-No.: 109781-47-7) zugesetzt. Nach kurzem Aufheizen und Abkühlen war die Lösung bereit für die Filmbildung. Pt(II)-meso-Tetra(pentafluorophenyl)porphin eignet sich besonders gut für Messungen von hohen Sauerstoffkonzentrationen.

Alternativ wurde die analoge Pd(II)-Verbindung Pd(II)-meso-Tetra(pentafluorophenyl)-porphin eingesetzt, welches sich besonders gut für Messungen von niedrigen Sauerstoffkonzentrationen eignet.

Als weitere Alternative wurde Topas in Cyclohexan gelöst und mit Pd(II)-meso-Tetraphenyl-tetrabenzophorphin versetzt.

Die Filmbildung kann alternativ nach allen gängigen Methoden für die Filmbildung aus Lösungsmitteln erfolgen. In einer ersten Methode wurden die Filme mittels Spin-Coating erhalten.

Ein 5x5 cm² Glaswafer (Dicke = 1 mm) wurde gut gereinigt und mit einer alkoholischen Lösung von Glycidyloxypropyl-trimethoxysilan zur besseren Haftung der Polymermatrix vorbehandelt.

Anschliessend wurde der Spin-Coater (Lot Oriel, Modell SCI-20) mit den Wafern beladen. Zur gleichmässigeren Filmbildung musste die Waferoberfläche vollständig mit der Fluorophor-Polymerlösung bedeckt werden. Die den ganzen Wafer bedeckende Lösung wurde anschliessend mit einer Umdrehungszahl von 3000 UpM abgespinnt (Beschleunigung = 2000 UpM/Sec; Abspinnrate = 3000 UpM). Dabei wird verhältnismässig viel der teuren, Platin-Fluorophore enthaltenden Polymerlösung abgespinnt und verbraucht. Um trotzdem einen ökonomischen Filmbildungsprozess zu erhalten, wurde die abgespinnte Lösung vorzugsweise aufgefangen, wieder gelöst und so recycliert.

Mit dieser Methode konnten Filmdicken von ca. 5 µm ± 0.2 µm erhalten werden.

Um der Filmbildungsneigung des Lösungsmittels entgegenzuwirken, wurden auch Versuche unternommen, die Filme in einer lösungsmittelgesättigten Atmosphäre innerhalb einer Kammer zu bilden. Dadurch konnten Lösungen durch Auftragung von 3 ml Fluorophor-Polymerlösung aus der Wafermitte verspinnt werden. Hierbei resultierten Filmdicken von ca. 5.3 µm, allerdings mit einer etwas grösseren Filmdickenvarianz.

Alternativ wurden die Wafer in einem Dip-Coating- oder Tauchbadverfahren mit der Fluorophor-Polymer-Lösung beschichtet. Die Wafer wurden in die Fluorophor-Polymerlösungen getaucht und anschliessend zur Trocknung der Membranschicht aufgehängt. Ein Problem dieser Methode bestand darin, dass sich die Lösung ca. 2-3 mm am unteren Waferrand ansammelte, was dort zu verstärkten Filmdicken führte. Diese Teile der Wafer wurden bei der weiteren Verarbeitung aufgrund der zu hohen und/oder zu ungleichmässigen Schichtdicke verworfen. Mit dieser Methode resultierten etwas ungleichmässigere Schichtdicken um die 6 µm, wobei die Schichtdicke gegen den unteren Waferrand leicht zunahm.

Bei einer dritten Methode wird die Fluorophor-Polymerlösung mittels eines Spray-Coatings auf die Wafer gesprüht. Die Wafer werden mit einigem Abstand bis unter die Fliessgrenze der Lösung besprüht. Für etwas dickere Schichtdicken und erhöhte Fliessgrenzen bzw. bessere Standfestigkeit kann die Fluorophor-Polymerlösung auch leicht konzentrierter angesetzt werden, was deren Viskosität schnell erhöht. Mit dieser Methode konnten die gleichmässigsten und dünnsten Filme mit Schichtdicken von z. B. 3.1 µm ± 0.1 µm hergestellt werden.

Bei einer vierten Methode wurden Filme mittels einer Rakelmaschine in sogenannter Dickfilmtechnik hergestellt. Die Rakelmaschine wurde auf einen Schlitzabstand (Abstand Rakel zu Waferunterlage) von 60 µm eingestellt und es wurden Filme aus der Fluorophor-Polymerlösung gezogen. Anschliessend liess man das Lösungsmittel abdampfen. Resultierende Filme waren leicht wellig und wiesen eine Schichtdicke von ca. 5.1 µm ±0.4 µm auf.

Bei einer fünften Methode wurden Polymersphären mit immobilisiertem Fluorophor hergestellt. Diese wurden anschliessend in Silicon eingebettet und die eingebetteten Sphären wurden gemäss der vierten Methode zu einem Film ausgezogen. Die Polymersphären wurden durch Ausfällen aus Fluorophor-Polymerlösung unter Zugabe eines weiteren Lösungsmittels, in welchem die Polymersphären unlöslich sind und anschliessendem Zentrifugieren gewonnen. Als weiteres Lösungsmittel eignen sich vor allem polare Lösungsmittel wie beispielsweise Wasser, Aceton, Ethanol oder Mischungen daraus.

Alternativ können Polymersphären durch einen Sprühtrocknungsprozess hergestellt werden.

Als weitere Alternative bietet sich die Herstellung Fluorophor-freier Sphären an, welche anschliessend mit dem Fluorophor behandelt werden, so dass dieses in die Sphären eindiffundiert. Diese Methoden zur Herstellung von Sphären aus Polymermaterialien sind prinzipiell bekannt und werden daher nicht im Detail beschrieben.

Die Schichtdicken der Polymermatrix sind insofern wichtig, als dass sie zwei wichtige Grössen beim optischen Messen des Sauerstoffgehalts mittels Fluoreszenzlöschung beeinflussen. Erstens bestimmt die Schichtdicke die Emissionsrate bzw. Reflexionsrate und damit die Intensität der Fluoreszenzantwort und zweitens ist sie massgeblich für die Ansprechzeit der Messvorrichtung.

Für eine gute Ansprechzeit sind möglichst dünne Filme vorteilhaft, damit der Sauerstoff einen möglichst geringen Diffusionsweg zur Löschung der Fluoreszenz zurücklegen muss. Die Sauerstoffdiffusionsrate durch das Polymer ist die zweite Grösse, welche die Ansprechzeiten der Sensorelemente beeinflusst. Diese sollte möglichst hoch sein und ist materialspezifisch. Für Topas-Qualitäten liegt sie im Bereiche von 250 (für Topas 5013X14 Tg = 136°C) bzw. 280 cm³*100 µm/(m²*Tag*bar).

Andererseits ist es notwendig, das die Fluoreszenzantwort auch für kleine Konzentrationen des Analyten eine bestimmte Mindestintensität aufweist, was eine Mindestkonzentration des Fluorophors in der Polymermatrix bedingt. Ferner waschen die Fluorophore z. B. beim Autoklavieren auch weniger schnell aus, wenn die Schichtdicken grösser sind. Um möglichst grosse Fluoreszenzantworten bei gleichzeitig dünnen Schichten zu erhalten, sollte die Konzentration an Fluorophoren in der Polymermatrix und in der Polymerlösung also einerseits gross sein, gleichzeitig aber klein genug sein, um die Polymereigenschaften nicht ungünstig zu beeinflussen, insbesondere Tg, die thermischen Eigenschaften und die Diffusionseigenschaften durch das Polymer hindurch. Mit einer Fluorophor-Konzentration von 2.3% g/g Polymer konnten dabei gute Resultate erzielt werden. Weitere Möglichkeiten zur Verstärkung des Messsignals durch eine Veränderung der Oberflächenstruktur der Polymermatrix werden im Zusammenhang mit den Beispielen 4 bis 6 näher erläutert.

Anstelle des sehr giftigen Lösungsmittels Chloroform kann auch das Lösungsmittel Cyclohexan verwendet werden. Das Polymer Topas löst sich sogar noch besser in diesem Lösungsmittel und ein Kaltlösen des Polymers ist in Konzentrationen bis zu 10% g Polymer/g möglich. Allerdings ist die Löslichkeit für den in diesem Beispiel gewählten Fluorophor etwas schlechter, so dass die Lösung vor der Filmbildung zwingend aufgeheizt und wieder abgekühlt werden musste. Bei der Lösungsmittelwahl ist in jedem Fall zu beachten, dass sowohl das Polymer wie auch der Fluorophor ausreichende Löslichkeiten zeigen müssen. Ferner sollte das Lösungsmittel einen möglichst tiefen Siedepunkt aufweisen, damit es auch wieder aus der Polymermatrix entfernt werden kann. Das Entfernen des Lösungsmittels muss vorsichtig ablaufen, um Blasenbildung in der Polymermatrix zu vermeiden. Deshalb wurden die hergestellten Filme vor dem Trocknen im Vakuumtrockenschrank an der Luft bei Raumtemperatur vorgetrocknet.

Nach der Filmbildung und ca. 24-stündigem Trocknen an der Luft wurden die beschichteten Wafer während 1 h bei 120°C im Vakuumtrockenschrank getrocknet.

Die so hergestellten Schichten wurden anschliessend alternierend mit weissen, porösen Teflonschichten (Dicke 5 µm) oder aber mit weissen Siliconschichten als optische Abdeckung oder Deckschicht versehen, um das Messsystem vor Fremdlicht und störender Fluoreszenz aus dem Messmedium zu schützen. Um schnelle Ansprechzeiten zu erhalten und um auf eine Schichtdickenvergrösserung durch zusätzliche weisse Siliconschichten zu verzichten und trotzdem gute Reemissionswerte zu erzeugen, kann die sensitive Schicht auch mit einem weissen, porösen Papier oder Fliessblatt abgedeckt werden. Zusätzlich wurde teilweise noch eine weitere schwarze Silicon- oder Teflon-Deckschicht aufgebracht, um das Eindringen von störendem Fremdlicht in das Sensorelement weiter zu reduzieren.

Mit derartigen Sensorelementen, auch Spots genannt, wurden anschliessend, nach Ermittlung der Stern-Vollmer-Kennlinie, Sauerstoffmessungen sowohl in der Gasphase wie auch in Flüssigkeiten durchgeführt. Angeregt wurden die Fluorophore mittels einer grünen LED und entsprechenden optischen Filtern bei ca. 505 nm mittels eines sinusförmigen Anregungssignals. Aus der Fluoreszenzantwort bei 650 nm wurde anschliessend eine Phasenverschiebung ermittelt.

Bei der Verwendung von Pt(II)-meso-Tetra(pentafluorophenyl)porphin als Fluorophor ergaben sich dabei folgende Ergebnisse: Das UV/VIS-Spektrum des Fluorophors Pt(II)-meso-Tetra(pentafluorophenyl)porphin (CAS-No.: 109781-47-7) zeigt ein erstes Absorptionsmaximum bei ca. 492 nm und zwei weitere schwächere Maxima bei ca. 507 nm und ca. 540 nm.

Das Spektrum des immobilisierten Fluorophors änderte sich kaum. Störende Matrixeffekte aufgrund einer möglichen Lumineszenz konnten bei Immobilisierung des Fluorophors Pt(II)-meso-Tetra(pentafluorophenyl)porphin nicht festgestellt werden.

Folgende Ansprechzeiten wurden für die so hergestellten, Pt(II)-meso-Tetra(pentafluorophenyl)porphin enthaltenden Sauerstoffelementen vor und nach dem Autoklavieren in der Gasphase sowie in Lösung ermittelt:

| Filmbildungsmethode | Schichtdicke | optische Abdeckung | | | | Ansprechzeit / Photomultipliercounts | | | |
|---|---|---|---|---|---|---|---|---|---|
| | | Teflon 5µm | Silicon 10µm | Silicon 50µm | Silicon 100µm | vor Autoklavieren | | nach 30 Autoklavierzyklen 130°C 30Min. | |
| | | | | | | Ansprechzeit */** (s) | counts in O₂ | Ansprechzeit */** (s) | counts in O₂ |
| Spin-Coating | 5 µm | X | | | | 20/45 | 17000 | 22/46 | 15000 |
| Spin-Coating | 5 µm | | X | | | 31/59 | 19000 | 30/61 | 17500 |
| Spin-Coating | 5 µm | | | X | | 42/71 | 19000 | 40/73 | 18000 |
| Spin-Coating | 5 µm | | | | X | 55/92 | 19000 | 55/95 | 18000 |
| Dip-Coating | ca. 6 µm | X | | | | 25/48 | 18000 | 30/50 | 15500 |
| Dip-Coating | ca. 6 µm | | X | | | 35/62 | 20000 | 36/64 | 18000 |
| Dip-Coating | ca. 6 µm | | | X | | 45/80 | 20000 | 50/85 | 18000 |
| Dip-Coating | ca. 6 µm | | | | X | 60/122 | 20000 | 68/142 | 18500 |
| Spray-Coating | 3.1 µm | X | | | | 15/38 | 12000 | 20/41 | 11000 |
| Spray-Coating | 3.1 µm | | x | | | 24/55 | 13500 | 28/60 | 12000 |
| Spray-Coating | 3.1 µm | | | X | | 38/67 | 13500 | 41/69 | 12500 |
| Spray-Coating | 3.1 µm | | | | X | 50/88 | 13500 | 51/86 | 12500 |
| Rakelmethode | 5.1 µm | X | | | | 22/46 | 17000 | 22/49 | 15000 |
| Rakelmethode | 5.1 µm | | X | | | 31/61 | 19000 | 34/66 | 17000 |
| Rakelmethode | 5.1 µm | | | X | | 45/75 | 19000 | 50/83 | 17500 |
| Rakelmethode | 5.1 µm | | | | X | 59/104 | 19000 | 101/114 | 18000 |

| | | | | | | | | | |
|---|---|---|---|---|---|---|---|---|---|
| */**Ansprechzeiten t_{98%} wurden ermittelt a.) aus Mediumswechsel Luft → Stickstoff; Stickstoff → Luft und b.) aus Mediumswechsel sauerstoffgesättigtes Wasser → sauerstofffreies Wasser (Wasser + Na-Disulphit + Spur Cobalt). | | | | | | | | | |

Die Nachweisgrenze der Fluoreszenzausbeute lag für das verwendete Messgerät bei ca. 5000 counts. Wird dieser Wert unterschritten, liegt die Analytkonzentration unterhalb der Nachweisgrenze und/oder das Sensorelement ist zu ersetzen.

Die Ansprechzeiten verlängerten sich nach 30 Autoklavierzyklen nur unwesentlich. Je dicker die Schichten und insbesondere auch die Siliconschichten sind, desto länger wurden die Ansprechzeiten. Es konnten Messspots mit guten, für Sterilisationsprozesse in der Food- und Pharmaindustrie ausreichend schnellen Ansprechzeiten, auch nach mehreren Autoklavierzyklen, hergestellt werden. Auch nahm die Intensität der ermittelten Fluoreszenz der Spots durch das Autoklavieren (in Phosphatpuffer) kaum ab, die Fluorophore wurden kaum ausgewaschen und sind durch die thermische Behandlung kaum ausgebleicht. Es ist bekannt, dass der Farbstoff selbst temperaturresistent ist. Die gute Resistenz gegen Auswaschen und Degradation des Fluorophors wird dem hohen Tg des immobilisierenden Polymers, sowie dessen geringer Wasseraufnahme, vor allem bei hohen Temperaturen, zugeschrieben.

### Beispiel Nr. 2: Optochemisches Sensorelement mit polymeren Wafern

Ein weiteres Beispiel für ein erfindungsgemässes optochemisches Sensorelement beinhaltet die Verwendung von polymeren Wafern als Träger. Polymere Wafer als Träger verbessern die Haftung der Polymermatrix mit dem immobilisierten Fluorophor auf dem Träger, insbesondere nach Alterung oder einer Vielzahl von Autoklavierzyklen. Die Benetzung des Wafers während des Spin-Coating-Prozesses und somit die Filmuniformität wird zudem massgeblich von der Übereinstimmung der Hydrophilie zwischen Substrat oder Träger und dem aufgespinnten Lösungsmittel mit dem darin gelösten Polymer und Fluorophor beeinflusst.

Polymere Wafer sind wesentlich hydrophober als Glasoberflächen und der Hydrophiliematch des Lösungsmittels, hier Chloroform oder Cyclohexan, zum Wafersubstrat ist wesentlich besser, was eine bessere Benetzung des Wafers und somit homogenere Filmoberflächen mit geringerer Topographie zulässt. Auch ist die Haftung der aufgespinnten Polymerfilme auf den polymeren Wafern besser als auf silanisierten Glasoberflächen. Auf einen Layeraufbau durch Zusammenkleben der einzelnen Layer kann vollends verzichtet werden.

Die verbesserte Haftung beruht einerseits auf einem verbesserten Hydrophiliematch zwischen Polymerfilm oder Polymermatrix und dem darunter liegendem Wafer, andererseits auf der Tatsache, dass die Lösungsmittel diese Wafer teilweise oberflächlich angreifen und die oberste Polymerschicht des Wafers anzulösen vermögen. Beim Abdampfen des Lösungsmittels verkeilen dann die angelösten Polymerketten des Wafers mit den noch in Lösung befindlichen Polymerketten des aufgebrachten Films, was zu einer enormen Haftungssteigerung führt und die Autoklavierbarkeit der Sensorelemente stark verbessert. Mit folgendem Vorgehen konnten optimale Spots erhalten werden.

### Polymerlösung:

22 g Topas 6015S-04 wurden in 178 g Cyclohexan unter Rückfluss gelöst. Nach Abkühlen wurden der Lösung 0.46 g Pd(II)-meso-Tetra(pentafluorophenyl)porphin zugesetzt. Zur besseren Lösung des Fluorophors musste die Lösung nochmals kurz zum Sieden gebracht werden.

Die Filmbildung erfolgte anschliessend mittels des Spin-Coating-Verfahrens auf polymeren Wafern, wie semikristallinem PA (z. B. der EMS-Chemie Typ TR XE 3942 Tg = 190°C; max. Gebrauchstemperatur = 160°C, autoklavierbar bei 130°C; Dicke der Wafer 0.8 mm) oder Topas selbst (Typ 6015S-04; Dicke 0.8 mm ± 1 mm; max. Gebrauchstemp. > 145°C).

### Dabei zeigten sich folgende Effekte:

Die aufgespinnte Lösung verteilte sich besser und gleichmässiger auf der Oberfläche und führt zu gleichmässigeren Filmen als beim Ausspinnen auf unbehandelten Glaswafern oder aber auf silanisierten Glaswafern.

Durch die bessere Übereinstimmung der Hydrophilie zwischen dem Lösungsmittels und dem Wafer, ist die Waferbenetzung wesentlich besser und schneller, so dass die sich an der Oberfläche bildenden Filme keine starken Topographieunebenheiten aufweisen. Vorzugsweise wurden die Topas-Wafer direkt nach dem Aufbringen der Lösung aus Lösungsmittel-gesättigter Atmosphäre abgespinnt. Topas wird durch das aufgebrachte Cyclohexan angelöst, was die Haftung des aufgespinnten Films verbessert. Auf diese Weise konnten durchsichtige klare Spots aufgebaut werden.

Polyamid-Wafer (PA-Wafer) sind wesentlich beständiger gegenüber Cyclohexan und lassen sich durch letzteres allenfalls anlösen. Von den Polymer-Materialien weist vor allem COC/Topas eine sehr gute optische Transparenz im unteren Wellenlängenbereich auf, was insbesondere bei kurzen Anregungswellenlängen der Fluorophore (bis 400nm) wichtig ist. Dadurch vergrössert sich die Fluoreszenzausbeute, da die Absorption der Fluoreszenz im Trägermaterial des optochemischen Sensorelements geringer ist.

Nach Trocknung an der Luft und im Ofen bei 120°C wurden die Wafer einem initialen Autoklavierzyklus unterzogen.

Nach Applikation einer ca. 60 µm dicken optischen Abdeckung aus weissem Silicon wurden die Spots analog Beispiel 1 vermessen. Es resultierten Ansprechzeiten von ca. 30 Sekunden in der Gasphase und ca. 80 Sekunden in kondensierten Phasen.

Mit ca. 14000 counts (in Luft) für die Spots auf Topas-Wafern war die Fluoreszenzausbeute genügend hoch, während die Spots auf PA-Wafern lediglich ca. 9000 counts zeigten, was an der geringeren Transparenz der PA-Wafer liegt.

Die Spots wurden anschliessend Alterungen und vor allem wiederholten CIP-Zyklen unterzogen, wobei sowohl mit Salpetersäure wie auch mit Natronlauge gereinigt wurde (70h 5% NaOH 80°C oder 70h HNO3 5% 80°C). Dabei zeigte sich die hervorragende Laugen- und Säurestabilität des Polymers COC. Die PA-Wafer zeigten nach Behandlung mit Lauge keine Veränderungen, vergilbten jedoch in Salpetersäure. Die nach Säurebehandlung vergilbten PA-Wafer wiesen eine erhöhte Absorptionsrate auf, was eine Verschlechterung der Sensorelementcharakteristik bedingte. Im Gegensatz dazu wiesen die COC-Wafer nach CIP-Prozeduren in Lauge wie auch in Säure keine Transmissionverluste oder Verfärbungen auf.

### Beispiel Nr. 3: Optochemisches Sensorelement mit hybriden Wafern

Ein weiteres Beispiel weist hybride Wafer als Alternative zu den als Träger verwendeten polymeren Wafern aus Beispiel 2 auf. Hybride Wafer bestehen im Wesentlichen aus einem sauerstoffundurchlässigen Glas, welches mit einem gut haftenden polymeren Haftvermittler für die aufzuspinnende Fluorophor-Polymerlösung versehen ist. Vorzugsweise wurde der Haftvermittler möglichst dünn aufgebracht, so dass dieser beim Aufspinnen eines Polymerfilms zwar in Wechselwirkung mit dem Lösungsmittel treten kann, jedoch das durch den Haftvermittler entstehende Sauerstoffreservoir möglichst gering gehalten wird. Haftvermittler sollten eine Schichtdicke von 10-20 µm nicht übersteigen, eine möglichst geringe Sauerstofflöslichkeit aufweisen und zudem transparent sein. Auf diese Weise wird wiederum eine Verkettung der Polymerketten zwischen dem angelösten Haftvermittler und dem aufzuspinnenden Polymer ermöglicht, was zu auch nach Alterung gut haftenden Sensorelementen führt, welche analog zu den in Beispiel 2 beschriebenen Sensorelementen hergestellt werden können.

Vorteilhaft an der Verwendung von hybriden Wafern ist, dass diese im Vergleich mit polymeren Wafern im Wesentlichen keine Sauerstoff-Permeabilität zeigen und zudem driftfreie Sensorelemente realisiert werden können. Das geringe Sauerstoffreservoir verringert zudem die Ansprechzeit des Sensorelements. Als Haftvermittler wurde zunächst eine Topas-Schicht oder einer Epoxy-Schicht aufgebracht.

Topas als Haftvermittler wurde als etwa 10 µm dicke Schicht auf einen hybriden Wafer durch Spin Coating aufgebracht. Der so vorbereitete Wafer wurde anschliessend wie in Beispiel 1 beschrieben weiterbehandelt.

Epoxy als Haftvermittler ist im Wesentlichen optisch transparent und zudem zeigen Epoxide eine besonders geringe Sauerstofflöslichkeit, wodurch auch dickere Schichten realisiert werden konnten. Als Haftvermittler können beispielsweise die niederviskosen Epoxyprodukte verwendet werden, welche unter der Bezeichnung EPOTEK 301, 302, 302FL von EPOTEK vertrieben werden und in dünnen Schichten mittels Spin-Coater auf Glaswafer aufgespinnt werden können.

Die Epoxy-Haftvermittlerschicht wurde wie folgt auf einen Glaswafer aufgebracht, welcher anschliessend gemäss dem in Beispiel 1 beschriebenen Verfahren weiterbehandelt wurde.

Die Glaswafer wurden zur besseren Benetzung der Epoxyschichten vorgängig mit Epoxypropyltrimethoxysilan vorbehandelt, dabei reagiert einerseits die Silangruppe mit der Glasoberfläche und andererseits bildet sich eine kovalente Bindung zwischen der Epoxy-Gruppe des Silans und dem Epoxyhaftvermittler aus. Auf den so vorbehandelten Wafer können glatte Epoxyfilme aufgespinnt werden.

Auf den vorbehandelten Glaswafer wurde anschliessend Epotek301 mit einer Enddrehzahl von ca. 3000 U/Min aufgespinnt. Um eine optimale Haftung der anschliessend aufgebrachten Fluorophor-Polymerschicht zu erreichen, wurde das aufgespinnte Epoxy zunächst 1 h bei ca. 50°C nur teilweise ausgehärtet, hier bis ca. 2/3 seiner Endhärte, und erst nach Aufbringen der Fluorophor-Polymerlayer zusammen mit dieser vollständig ausgehärtet. Die Härtezeit von EPOTEK 301 liegt bei etwa 1 h 65°C oder 24h 23°C.

### Beispiel 4: Applikation auf Lichtleiter

In einem weiteren Beispiel wird die Polymermatrix mit dem immobilisierten Fluorophor als Cladding oder Teil des Claddings auf den Kern eines POF-Lichtleiters (**Polymer**ic **O**ptical **F**ibre) aufgebracht. Ein Lichtleiter besteht in der Regel aus einem lichtleitenden Kern, welcher von einem Cladding und einem Mantel umgeben ist. Der Mantel dient vor allem als äusserer Schutz des Lichtleiters.

Es ist darauf zu achten, dass das Polymer, in dem der Fluorophor immobilisiert ist, über einen kleineren Brechungsindex verfügt, als das Material des darunterliegenden Kerns, damit es am Kern-Cladding-Interface zu einer Totalreflektion kommt. Der Fluorophor in der Polymermatrix wird dann durch das evanescente Feld des Lichtleiters angeregt. Der Kern sollte ein Material mit einem Brechungsindex von ca. 1.6 bis 1.8 umfassen. Geeignet sind beispielsweise Lichtleiter mit einem Kern aus Poly(pentabromophenyl acrylat-co-glycidyl methacrylat) (Tg. = 162°C, löslich in Chloroform, Fluka Art.-No.: 591408), welches einen hohen Brechungsindex aufweist.

Als Polymermatrix mit immobilisiertem Fluorophor oder Polymer-Cladding können somit alle Polymere mit einem Brechungsindex kleiner 1.6, die zudem über die nötigen thermischen und optischen Eigenschaften verfügen, eingesetzt werden.

Zu diesen zählen sowohl COC, COP als auch PMMI Polymere, welche über folgende Brechungsindices (ISO 489) verfügen:
COC (Typ 60155S-04) n = 1.53
PMMI (Pleximid 8817) n = 1.53.

### Vorgehen:

Vom POF-Lichtleiter wurde über eine Strecke von ca. 3 mm der Mantel und das Cladding entfernt. Das darunterliegende Kern-Material aus Poly(pentabromophenyl acrylat-co-glycidyl methacrylat) wurde anschliessend mit Ethanol gereinigt.

Anschliessend wurde die Spitze mittels Dip-Coating in einer Fluorophor-Polymerlösung sehr niedriger Viskosität (6.25 % Topas gelöst in Chloroform, 2.5 % Fluorophor g/g Polymer) beschichtet. Der durch das Dip-Coating resultierende Polymertropfen am Ende der Glasfaser wurde mittels eines Messers abgeschnitten und das anschliessend freiliegende Faserende wurde mit Silber als Reflektor beschichtet. Anschliessend wurde das ganze Faserende (Spitze mit Silberbelag incl. 3 mm-Polymerschicht mit immobilisiertem Fluorophor) mit einer sauerstoffpermeablen Verkleidung oder Mantel versehen.

Die Verkleidung sollte wiederum den kleineren Brechungsindex aufweisen als das darunterliegende Polymer-Cladding. Weiterhin sollte die Verkleidung sauerstoffpermeabel und elastisch sein, um einen guten Schutz für den Kern und das Cladding zu bieten. Ein Beispiel einer derartigen sauerstoffpermeablen Verkleidung ist ein weisses RTV-Silicon (Silicon aus Vinyl-terminiertem Poly(dimethylsiloxan)), wie es in den Beispielen 1 bis 3 bereits als optische Abdeckung verwendet wurde. Das Silicon ist hierbei vorzugsweise weiss, um die Einkopplung von störendem Fremdlicht in den Lichtleiter zu verhindern. Die Verkleidung wurde mit einer Schichtdicke von maximal etwa 100 µm aufgebracht, um Sensorelemente mit einer kurzen Ansprechzeit zu realisieren.

Mögliche Produkte für eine solche Verkleidung sind die Siliconprodukte der Gelest Inc. (Gelest OE™41/42/43) mit Brechungsindices von 1.41 bis 1.43 gefüllt mit Titandioxid oder ein regulärer, niedrigviskoser RTV-Silicon der DowCorning, z. B. dem RTV 732 "weiss". Letzteres Silicon ist als weisses Silicon erhältlich und von der FDA für den Kontakt mit Lebensmitteln zugelassen. Weitere geeignete Siliconprodukte sind kommerziell erhältlich.

### Applizierte Polymerlösung:

1g Topas (Typ 6015S-04) wurden in 15g Chloroform gelöst. Der Chloroformlösung wurden anschliessend 0.0253g Pt(II)-meso-Tetra(pentafluorophenyl)porphin zugesetzt und gut gelöst. Hierfür wurde unter Rückfluss kurz aufgeheizt. In diese Lösung wurde anschliessend zum Dippen der vorbehandelten Glaswellenleiter verwendet.

Alternativ wurde die analoge Pd(II)-Verbindung Pd(II)-meso-Tetra(pentafluorophenyl)-porphin eingesetzt.

Als weitere Alternative wurde Topas in Cyclohexan gelöst und mit Pd(II)-meso-Tetraphenyl-tetrabenzo-phorphin versetzt.

### Resultat:

Wegen des Dippens in einer relativ viskosen Siliconlösung wurden die optischen Schutzschichten bzw. der Mantel für die Lichtwellenleiter relativ dick, was sich in den Ansprechzeiten der so hergestellten Sensorelemente niederschlug. Mit dem Gelest-Produkt konnten wegen der niedrigeren Viskosität die dünneren Verkleidungen erhalten werden, was zu schneller reagierenden Sensorelementen führte, als die mit Silicon (Typ 732) "weiss" beschichteten Lichtwellenleiter. Hingegen ist der mit Gelest-Coating beschichtete Lichtleiter empfindlicher gegenüber Fremdlicht, da er TiO₂-frei und damit transparent, wie von Gelest erhalten, appliziert wurde. Für weitere Experimente sollte eine weisse TiO₂-Schicht als Lichtbarriere eingeführt werden. Aufgrund der Transparenz des Materials mussten die Messungen unter Ausschluss von Fremdlicht durchgeführt werden. Mit beiden Arten von optischer Abdeckung konnten Sensorelemente mit einem ausreichenden Fluoreszenzsignal erhalten werden.

Aufgrund der Chloroform-Löslichkeit des Kernmaterials Poly(pentabromophenyl acrylat-co-glycidyl methacrylat) und dessen Temperaturstabilität, konnte eine gute Haftung zwischen dem Kernmaterial und dem aufgebrachten Polymer-Cladding erreicht werden. Es konnte gezeigt werden, dass so als Sensorelement präparierte Lichtleiter gegenüber Autoklavierzyklen beständig sind und sofern die Haftung zwischen der Verkleidung und dem Cladding gegeben ist auch für Hochtemperaturanwendungen bis 130°C einsetzbar sind. Die Haftung zwischen Verkleidung und Cladding kann analog zu Beispiel 1 verstärkt oder erzielt werden.

### Beispiel 5: Wafer mit strukturierter Oberfläche

In einem weiteren Beispiel wird ein Glaswafer mit einer strukturierten Oberfläche als Träger eingesetzt, wobei es sich um eine unregelmässige oder regelmässige Strukturierung handelt. Die Strukturierung des Wafers kann durch Sandstrahlen, Schleifen oder verschiedene bekannte Ätztechniken erfolgen. Mit Hilfe photolitographischer Methoden kann durch Ätzen auch eine regelmässige, definierte Strukturierung und/oder diffus streuende Geometrien hergestellt werden.

### Vorgehen:

Es wurden strukturierte Waferoberflächen mit Vertiefungen mit Tiefen von ca. 50-100 µm nach einem der bekannten Verfahren erzeugt.

Auf die strukturierte Oberfläche der Wafer wurde anschliessend eine Fluorophor-Polymerlösung wie in den vorangegangenen Beispielen aufgespinnt oder alternativ die strukturierte Oberfläche mit der Lösung überspült.

Das so hergestellte Sensorelement wurde nach der Trocknung noch abgeschliffen, so dass Vertiefungen von etwa 5-20 µm verblieben. Durch das Abschleifen entstanden auf der strukturierten Oberfläche sowohl freie Glasareale als auch mit der Polymermatrix mit dem immobilisierten Fluorophor bedeckte Areale. Die freien Glasareale weisen im Vergleich zu den beschichteten Arealen eine erhöhte Alterungsbeständigkeit auf.

Eine Strahlungsundurchlässige Deckschicht kann anschliessend in Dicken von z. B. 50 µm leicht darübergerakelt werden.

An diesen, unterschiedlich ausgeprägten Vertiefung wird das Anregungslicht diffus gestreut, wodurch das Messsignal, hier die Fluoreszenzintensität, verstärkt wird.

### Beipiel 6: In Silkon immobilisierte Polymershpären

In diesem letzten Applikationsbeispiel werden Sphären aus Topas mit immobilisiertem Fluorophor in Silicon eingebettet und die entstandene Polymermischung auf Glaswafern ausgerakelt.

### Vorgehen:

Polymersphären aus den bereits vorgängig erwähnten Fluorophor-PolymerMischungen wurden einerseits durch Ausfällen aus der in Chloroform oder Cyclohexan gelösten Fluorophor-Polymerlösung unter Zugabe eines zweiten Lösungsmittels, z. B. Wasser, in welchem die Polymersphären unlöslich sind, und anschliessendem Zentrifugieren gewonnen. Die erhaltenen Sphären wurden anschliessend in einen Siliconfilm eingebettet.

Alternativ wurden Fluorophor-Polymer-Filme mit einer Dicke von weniger als 10 µm auf Glassubstraten nicht haftend ausgespinnt. Die entstandenen Filme wurden von den Substraten abgelöst oder abgezogen und zerkleinert. Die Bruchstücke der Polymermatrix wurden anschliessend in Siliconfilme eingearbeitet.

### Resultat:

Es konnte gezeigt werden, dass die Grösse bzw. die Grössenverteilung der Polymersphären einen Einfluss auf die Ansprechzeit des resultierenden Sensorelements hat. Je kleiner die Sphären waren, desto kleiner bzw. schneller waren die Ansprechzeiten der resultierenden Sensorelemente. Die Dicke der Siliconschichten hatte keinen grossen Einfluss auf die Ansprechzeit. Es wurde gezeigt, dass sogar mit einer Gesamtschichtdicke des Sensorelements von ca. 100 µm ausreichend kleine Ansprechzeiten realisiert werden konnten.

## Patentansprüche

1. Optochemisches Sensorelement (9) zur Messung von gasförmigen oder gelösten Analyten, insbesondere von Sauerstoff, umfassend einen in einer Polymermatrix (23) immobilisierten Fluorophor (25), wobei die Polymermatrix (23) ein Polymer mit einem nicht-aromatischen Rückgrat umfasst ausgewählt aus der Gruppe bestehend aus Poly(n-methylmethacrylimid) und Ethylen-Norbornen Copolymer.

2. Optochemisches Sensorelement (9) gemäss Anspruch 1, wobei das Polymer ein Ethylen-Norbornen Copolymer ist.

3. Optochemisches Sensorelement (9) gemäss einem der vorangehenden Ansprüche, wobei die Polymermatrix (23) auf einem Träger (27) aufgebracht ist.

4. Optochemisches Sensorelement (9) gemäss Anspruch 3, wobei der Träger (27) ein Material ausgewählt aus der Gruppe bestehend aus Glas, Polyester, amorphem oder teilkristallinem Polyamid, Acrylat, Polycarbonat, Ethylen-Norbornen Copolymere (cyclische Olefin-Copolymere) und Kombinationen dieser Materialien.

5. Optochemisches Sensorelement (9) gemäss Anspruch 4, wobei der Träger (27) Ethylen-Norbornen Copolymere (Cyclische Olefin-Copolymere) umfasst.

6. Optochemisches Sensorelement (9) gemäss Anspruch 4, wobei der Träger (27) ein hybrider Träger ist.

7. Optochemisches Sensorelement (9) nach einem der Ansprüche 1 bis 2, wobei die Polymer matrix (25) mit dem immobilisierten Fluorophor direkt auf dem Kern eines Lichtleiters angeordnet ist.

8. Optochemisches Sensorelement (9) nach einem der Ansprüche 1 bis 2, wobei Sphären oder Bruchstücke der den immobilisierten Fluorophor enthaltenden Polymermatrix in einer Siliconmatrix angeordnet sind.

9. Optochemisches Sensorelement (9) gemäss einem der Ansprüche 1 bis 8, wobei der Analyt gasförmiger oder gelöster Sauerstoff ist.

10. Verwendung eines optochemischen Sensorelements (9) gemäss einem der Ansprüche 1 bis 9, in einer Messvorrichtung (1) zur Bestimmung von gasförmigen oder gelösten Analyten, insbesondere Sauerstoff.

## Claims

1. Optochemical sensor element (9) for the measurement of gaseous or dissolved analytes, particularly of oxygen, comprising a fluorophor (25) that is immobilized in a polymer matrix (23), wherein the polymer matrix (23) comprises a polymer that has a non-aromatic backbone and is selected from the group consisting of consisting of poly(n-methylmethacrylimide) and ethylene-norbornene copolymer.

2. Optochemical sensor element (9) according to claim 1, wherein the polymer is an ethylene-norbornene copolymer.

3. Optochemical sensor element (9) according to one of the preceding claims, wherein the polymer matrix (23) is arranged on a substrate (27).

4. Optochemical sensor element (9) according to claim 3, wherein the substrate (27) comprises a material selected from the group consisting of glass, polyester, amorphous or partially crystalline polyamide, acrylate, polycarbonate, ethylene-norbornene copolymers (cyclic olefin copolymers) and combinations of these materials.

5. Optochemical sensor element (9) according to claim 4, wherein the substrate (27) comprises ethylene-norbornene copolymers (cyclic olefin copolymers).

6. Optochemical sensor element (9) according to claim 4, wherein the substrate (27) is a hybrid substrate.

7. Optochemical sensor (9) according to one of the claims 1 to 2, wherein the polymer matrix (25) with the immobilized fluorophor is arranged directly on the core of an optical fiber.

8. Optochemical sensor element (9) according to one of the claims 1 to 2, wherein spheres or fragments of the polymer matrix containing the immobilized fluorophor are arranged in a silicone matrix.

9. Optochemical sensor element (9) according to one of the claims 1 to 8, wherein the analyte is gaseous or dissolved oxygen.

10. Use of an optochemical sensor element (9) according to one of the claims 1 to 9 in a measuring device (1) for the determination of a gaseous or dissolved analyte, in particular of oxygen.

## Revendications

1. Elément détecteur (9) optochimique destiné à mesurer des analytes gazeux ou dissous, notamment de l'oxygène, comprenant un fluorophore (25) immobilisé dans une matrice polymère (23), la matrice polymère (23) comprenant un polymère avec un squelette non aromatique, choisi dans le groupe constitué de copolymère de poly(n-méthylméthacrylimide) et d'éthylène-norbornènes.

2. Elément détecteur (9) optochimique selon la revendication 1, le polymère étant un copolymère d'éthylène-norbornènes.

3. Elément détecteur (9) optochimique selon l'une quelconque des revendications précédentes, la matrice polymère (23) étant appliquée sur un support (27).

4. Elément détecteur (9) optochimique selon la revendication 3, le support (27) étant une matière choisie dans le groupe comprenant le verre, le polyester, le polyamide amorphe ou semi-cristallin, l'acrylate, le polycarbonate, des copolymères éthylène-norbornènes (copolymères d'oléfine cycliques) et des associations desdites matières.

5. Elément détecteur (9) optochimique selon la revendication 4, le support (27) comprenant des copolymères éthylène-norbornènes (copolymères d'oléfine cycliques).

6. Elément détecteur (9) optochimique selon la revendication 4, le support (27) étant un support hybride.

7. Elément détecteur (9) optochimique selon l'une quelconque des revendications 1 à 2, la matrice polymère (25) étant placée avec le fluorophore immobilisé directement sur le coeur d'un guide d'ondes optiques.

8. Elément détecteur (9) optochimique selon l'une quelconque des revendications 1 à 2, des sphères ou des fragments de la matrice polymère contenant le fluorophore immobilisé étant placées dans une matrice en silicone.

9. Elément détecteur (9) optochimique selon l'une quelconque des revendications 1 à 8, l'analyte étant de l'oxygène gazeux ou dissous.

10. Utilisation d'un élément détecteur (9) optochimique selon l'une quelconque des revendications 1 à 9 dans un dispositif de mesure (1) destiné à identifier des analytes gazeux ou dissous, notamment de l'oxygène.
